# EUROPEAN PATENT APPLICATION

(11) **EP 4 755 584 A1**
(43) Date of publication of application: **10.06.2026**
(21) Application number: 25218602.8
(22) Date of filing: 26.11.2025
(51) Int. Cl.: B25B 27/24, F16K 43/00, F25B 45/00

(54) **MULTI-PORT CORE REMOVAL TOOL**

(30) Priority: 05.12.2024 US 202418969709
(71) Applicant: Ritchie Engineering Company, Inc., Bloomington, Minnesota 55438 (US)
(72) Inventor: PLASEK, RONALD A., BLOOMINGTON, MINNESOTA, 55438 (US); GUSE, GREGORY M., BLOOMINGTON, MINNESOTA, 55438 (US)
(74) Representative: Sandri, Sandro

(57) **Abstract**

An embodiment provides a tool, including: a flare nut region at a distal end of the tool comprising a fastener complementary to a fitting on an environmental control system, wherein the fastener and the fitting form an air tight seal; a core removal tool region at a proximal end comprising a shaft, a knob at the proximal end of the shaft, and a slidable fastener, wherein a distal end of the shaft has a complementary shape to a core; and a coupler region between the distal end of the tool and the proximal end of the tool, the coupler region comprising at least two ports, an internal valve, and a longitudinal volume to accept the distal end of the core removal tool region. Other aspects are described and claimed.

## Description

### FIELD

This application relates generally to the field of heating, ventilation, and air conditioning (HVAC) servicing, and, more particularly, to removal and installation of a core valve to perform servicing utilizing a multi-port tool.

### BACKGROUND

A heating, ventilation, and air conditioning (HVAC) system maintains characteristics of an environment, for example, a temperature, humidity, and/or the like. The system uses a thermostat set by a user or system to a desired setting. The system uses a system with pressurized gas in a closed system in conjunction with pipes, valves, compressor(s), condenser(s), fans, air handlers, and associated ducting and vents. The system delivers air that may either heat, cool, alter humidity, and/or the like to a set point as desired. These systems require both an initial installation, periodic maintenance over the life of the system, and/or diagnostics and/or repair of the system. The maintenance and/or diagnostics may require either pulling a vacuum in the system or introduction/replenishment of a gas.

### BRIEF SUMMARY

In summary, one embodiment provides a tool, comprising: a flare nut region at a distal end of the tool comprising a fastener complementary to a fitting on an environmental control system, wherein the fastener and the fitting form an air tight seal; a core removal tool region at a proximal end comprising a shaft, a knob at the proximal end of the shaft, and a slidable fastener, wherein a distal end of the shaft has a complementary shape to a core; and a coupler region between the distal end of the tool and the proximal end of the tool, the coupler region comprising at least two ports, an internal valve, and a longitudinal volume to accept the distal end of the core removal tool region.

Another embodiment provides a method for servicing an environmental control system, comprising: removing a core on the environmental control system using a multi-port core removal tool; and installing the multi-port core removal tool within the environmental control system; wherein the multi-port core removal tool comprises: a flare nut region at a distal end of the tool comprising a fastener complementary to a fitting on an environmental control system, wherein the fastener and the fitting form an air tight seal; a core removal tool region at a proximal end comprising a shaft, a knob at the proximal end of the shaft, and a slidable fastener, wherein a distal end of the shaft has a complementary shape to a core; and a coupler region between the distal end of the tool and the proximal end of the tool, the coupler region comprising at least two ports, an internal valve, and a longitudinal volume to accept the distal end of the core removal tool region.

A further embodiment provides a tool, comprising: a flare nut region at a distal end of the tool comprising a fastener complementary to a fitting on an environmental control system, wherein the fastener and the fitting form an air tight seal; a core removal tool region at a proximal end comprising a shaft, a knob at the proximal end of the shaft, and a slidable fastener, wherein a distal end of the shaft has a complementary shape to a core; and a coupler region between the distal end and the proximal end having at least two ports, at least two vacuum pump hoses operatively coupled to the at least two ports, an internal valve, and a longitudinal volume to accept the distal end of the core removal tool region, wherein provision of the at least two vacuum pump hoses reduce a time to reach a vacuum within the environmental control system.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example embodiment exploded view of a multi-port core removal tool.
FIG. 2 illustrates another example embodiment exploded view of a multi-port core removal tool.
FIG. 3 illustrates an example embodiment unassembled view of a multi-port core removal tool.
FIG. 4 illustrates an example embodiment assembled view of a multi-port core removal tool.
FIG. 5 illustrates an example embodiment section view of a multi-port core removal tool.
FIG. 6 illustrates an example embodiment section view with flow indication of a multi-port core removal tool.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, appearances of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well-known structures, materials, or operations are not shown or described in detail. The following description is intended only by way of example, and simply illustrates certain example embodiments.

Conventional methods and devices for servicing HVAC or environmental control system may use a tool to remove a core. A core may be a valve or port to allow a user or service technician access to the inside of closed off portion of the HVAC system. The HVAC system may require a vacuum to be pulled inside the closed system. In other words, a vacuum pump may be attached at a port to evacuate the contents of the system. The vacuum may be performed to leak test a system and/or to prepare the system for the introduction of a refrigerant or gas. The port may be used for both a vacuum pump and introduction of a gas in the same service session. A vacuum hose or a hose may connect the port to a vacuum pump.

One limitation of a conventional HVAC service methods is the time required to pull a vacuum in a system. For example, a user or technician may have a single port which a vacuum pump and/or gas cylinder may be attached. Such a limitation increases the time required to pull or achieve a vacuum within the system. Thus, a technician can attach a single vacuum pump or gas cylinder to the HVAC system at a time. A technician wastes time by waiting for the vacuum to be complete.

Accordingly, an embodiment provides a device and method for a multi-port core removal tool for HVAC servicing. The HVAC system may be referred to as an environmental control system. For ease of readability the multi-port core removal tool may be referred to as a tool. The tool may attach to either a high- or low-pressure side of the HVAC system. For example, the tool may attach to a low-pressure side port or a high-pressure side port. The tool may provide a portion that the user manipulates to remove a core or valve within the HVAC system to open the volume of the HVAC system to a coupler with multiple ports on a coupler. The coupler may have two or more coupler ports. Other configurations are disclosed that use or include more than two ports. The number of ports may be selected upon the use of the tool and how many HVAC accessories, devices, and/or the like are necessary for HVAC service. The coupler ports may receive a vacuum pump, a vacuum pump hose, a coupling hose, gas cylinder, diagnostic equipment, and/or the like. For example, the tool may allow attachment of two or more vacuum pumps to the HVAC system. The use of multiple vacuum pumps allows a desired vacuum to be achieved within the HVAC system more efficiently and more quickly. The tool may be used in other applications, for example, a beverage dispensing system and/or any other system where multiple ports may be useful. Thus, while a HVAC system will be discussed here throughout, this is not intended to limit the disclosure to only an HVAC system.

The illustrated example embodiments will be best understood by reference to the figures. The following description is intended only by way of example, and simply illustrates certain example embodiments.

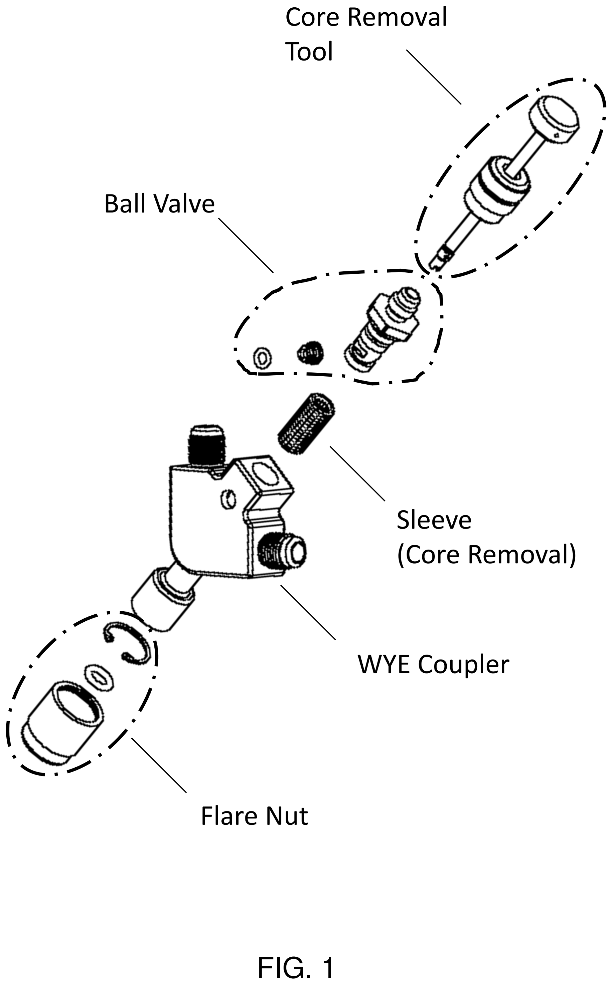

Referring to FIG. 1, an example device and method for a multi-port core removal tool is illustrated. The multi-port core removal tool or tool may be described in regions of the tool. The tool may have portions or regions from a distal end to a proximal end with respect to a user when a user might be using the tool. The terms distal and proximal are intended to describe the locational relationship of the different regions with respect to each other and are not intended to limit the disclosure with respect to a locational relationship of the regions with respect to the user as the tool could be moved or rotated which would result in the regions being located in different positions with respect to the user. Beginning with the distal end which may be located near the HVAC system when the tool is attached to the HVAC system, there may be a flare nut or coupler to attach to the HVAC system. The next region may be a coupler with an associated ball valve or valve within the coupler. At the most proximal end there may be a core removal tool. Further details of each region or portion are described herein. As the tool may be used in a vacuum or pressurized environment, any point of connection between tool components or regions may require washers, O-rings, and/or the like to form an airtight seal of the tool components.

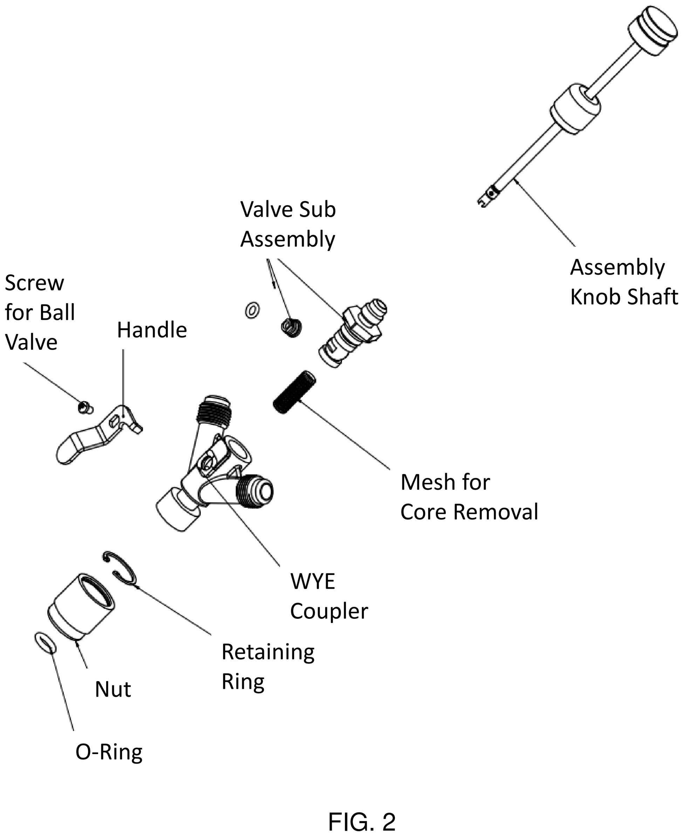

Referring to FIG. 1, the flare nut region may be the attachment point of the tool to the HVAC system, and located distal or away from the user when in use. A flare nut is an example, and the flare nut may be any fastener complementary to a fitting upon the HVAC system. In other words, this is the region of the tool that connects with and forms a seal between the tool to the HVAC system. The flare nut makes a connection or coupling from the tool to the HVAC system. The flare nut may also have an associated O-ring and/or retaining ring to form a seal and/or retain the flare nut upon the tool *(See* FIG. 2). For example, the flare nut may be a female threaded nut to fit upon a male threaded fitting of a HVAC system, and the O-ring provides a seal. This seal connects the inside volume of the HVAC system to the inside volume of the tool and any associated apparatus connected to the tool such as a vacuum pump and/or gas cylinders. The connection described herein is an exemplar, and it is disclosed that other connection fitting types may be used or adapted for the HVAC system to be service. Additionally, the tool may be used on a low-pressure port or a high-pressure port of an HVAC system. For example, the threaded diameter may be 1/4, 5/16, or any other size. Additionally, the fitting may be a cam lock, bayonet lock, quick connect, and/or the like. Other connections used on the tool may use the described fittings. In this manner, the tool may be adapted for different uses, regions, systems, and/or the like. The HVAC system port to which the tool connects, may have a valve or valve core at the tool attachment location. For example, the valve core may be a Schrader valve. The valve core may have a shape that complements a portion of the core removal tool as described herein allowing a manipulation and removal of the valve core.

Referring to FIG. 1, the coupler region may be at a midpoint of the tool between the flare nut region and the core removal tool region. The coupler region may be a WYE coupler. The coupler may have an inner volume that runs longitudinally along the length of the coupler. The coupler may have an opening at a proximal end to accept the core removal tool, and an opening at a distal end connected to the flare nut region. The coupler may have ports that radiate from the longitudinal volume and share the same volume *(See* FIG. 2).

The coupler may be referred to as a WYE coupler. In other words, the coupler may have two or more ports that extend out from the longitudinal axis in a radial direction. While only a two port coupler is illustrated, it should be noted that the coupler region may include more than two ports, either on the same coupler or on a separate coupler that is attached to another coupler. In other words, additional ports may be integral to the illustrated coupler type or additional ports may be included on other couplers that are attached to the illustrated coupler, thereby creating stacked couplers.

The ports may be threaded. For example, each port may be a threaded male end. However, other port types can be utilized, for example, female threaded ends, quick connect ports, and/or the like. Each port may have a valve for each port, thereby allowing the tool to be used with all the ports or only a subset of ports. In other words, each port may have a valve to isolate the port from the longitudinal volume of the coupler so that a port can be closed and not used to allow the tool to be used using less than all of the possible ports. Additionally, or alternatively, each port may be capped with an airtight cap. In an embodiment, each port may be capable of being operatively coupled to another HVAC apparatus. For example, each port may be connected to a vacuum pump, a vacuum hose, a gas cylinder, a volume of refrigerant, a diagnostic tool, a pressure gauge, a containment vessel, a waste vessel, a volume of lubricant, and/or the like. A single vacuum pump may be connected to two or more ports using two or more vacuum hoses. Alternatively, a separate vacuum pump may be connected to each port using two or more vacuum hoses.

Referring to FIG. 1 and FIG. 2, the coupler region may have an associated ball valve. Thus, in the example where each port on the coupler region has a valve, the coupler itself may have a valve or a ball valve. The ball valve may have multiple configurations or positions. For example, the ball valve may stop a flow along the longitudinal axis of the coupler, along a port, along multiple ports, or a combination thereof. In an embodiment, the ball valve is situated inside the coupler. The ball valve may have a stem extending from the ball of the ball valve through the body of the coupler in an airtight manner to a handle positioned outside the body of the coupler. A user may rotate the handle and select a direction of flow within the coupler region. The valve inside the coupler may be a cylindrical valve with the handle rotating the valve to direct flow within the coupler. The coupler may also have a screen, mesh, sleeve, and/or insert to allow a valve core to be pulled proximally or toward the user. The screen allows the valve core to be pulled and retained without interfering with the flow of gas through the coupler as selected by a user. The screen may also hold a core even if a vacuum is drawn in the HVAC system which would normally pull or suck the core back into place on the HVAC system.

Referring to FIG. 1, in an embodiment, the core removal tool region may be proximal to a user or technician when the tool is in use. The core removal tool region may be a shaft or assembly knob shaft *(See* FIG. 2). The proximal end of the shaft may have a knob. The knob may be capable of turning or rotating the shaft along the shaft's longitudinal axis. The knob may be covered in a grip, texture, knurling, and/or the like, to allow a user to grip and turn the shaft. The distal end of the shaft may have an end that fits complementary or mates with an opposing surface on the valve core. For example, when the shaft and distal end is pushed up against the valve core and rotated, the core removal tool may remove the valve core. The midpoint of the valve removal tool may have a fastener or nut that the shaft passes through and allow the shaft to move. The fastener or nut may be referred to as slidable along the shaft. The nut may have associated washers or O-rings to provide an airtight seal when the nut is fastened upon the coupler.

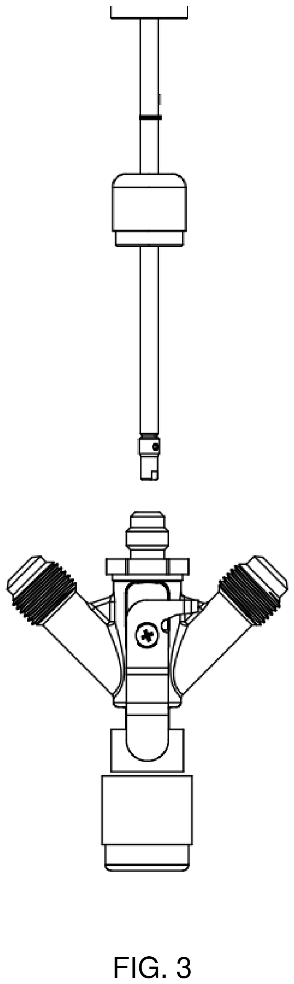

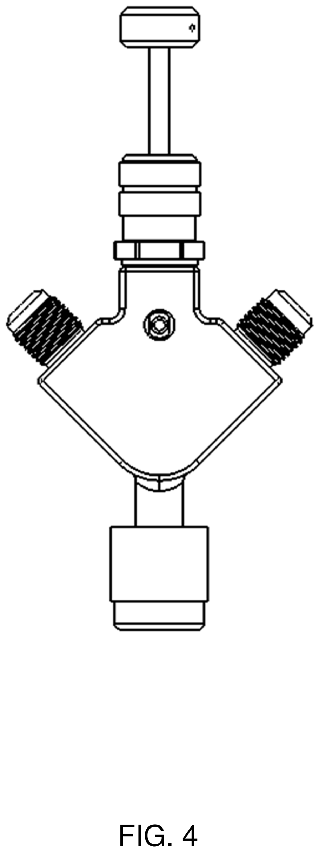

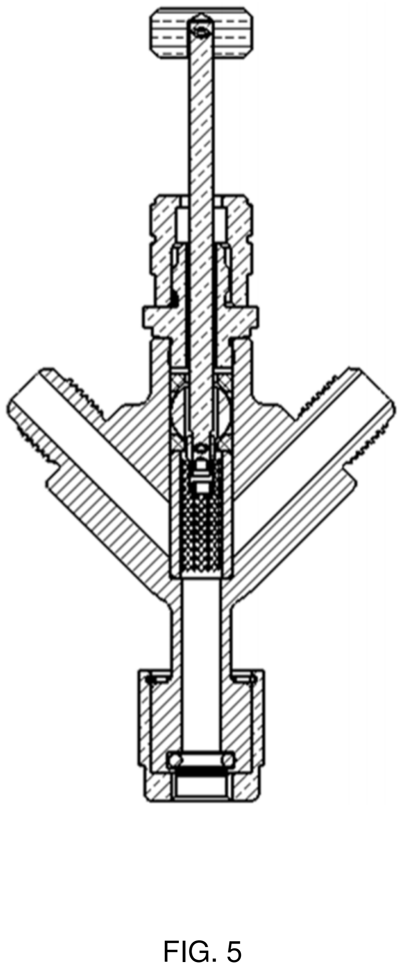

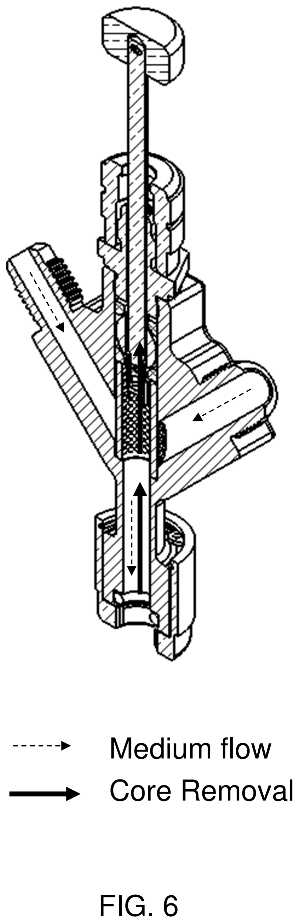

Referring to FIG. 3, in an embodiment, an unassembled multi-port core removal tool is shown. The flare nut region and coupler region are assembled. The core removal tool region is aligned, but not inserted into the other regions. Referring, to FIG. 4, the core removal tool region is inserted and fastened to the other regions to provide the tool assembled. Referring to FIG. 5, in an embodiment, a section view or cutaway view of a multi-port core removal tool is illustrated. The figures demonstrate how the pieces or regions of the tools fit together. The tool provides a method to remove a core from the HVAC system, and allow a continuous volume or path from the HVAC system to the coupler ports as described herein. Referring to FIG. 6, in an embodiment, a section view with flow indication of a multi-port core removal tool is illustrated. For example, a medium such as refrigerant may be introduced into one or more ports and into the HVAC system (dotted arrows). Alternatively, multiple vacuum pumps may be attached to multiple port to evacuate or leak test the HVAC system. For example, a vacuum may be created or pull in the HVAC system to test for cracks, pinholes, leaks at seam/joints/couplers/ fittings, or the like. The solid arrows indicated the movement of the core after removal, movement to the mesh area of the coupler, allowing the two or more ports to be volumetrically connected to the volume of the HVAC system.

The various embodiments described herein thus represent a technical improvement to conventional HVAC service equipment. Using the techniques and device as described herein, an embodiment may use a device and method to draw a vacuum faster upon a HVAC system. As an example, some HVAC system require a 3 - 4 hour process to pull a vacuum, and the method described herein may lower that time to 2.0 - 2.5 hours. This is in contrast to conventional methods with limitations mentioned above. Such techniques provide a better device and method to service the HVAC system.

In an embodiment, the tool may be operatively coupled to an electronic device. For example, the tool may be used in conjunction with a digital pressure meter, a diagnostic tool, a visual or audio output, an electronic diagnostic manual, an electronic troubleshooting guide, a system to monitor the HVAC system, a log of conditions of the HVAC system, or the like.

It can be appreciated from the foregoing that electronic components of one or more systems or devices may include, but are not limited to, at least one processing unit, a memory, and a communication bus or communication means that couples various components including the memory to the processing unit(s). A system or device may include or have access to a variety of device readable media. System memory may include device readable storage media in the form of volatile and/or nonvolatile memory such as read only memory (ROM) and/or random access memory (RAM). By way of example, and not limitation, system memory may also include an operating system, application programs, other program modules, and program data. The disclosed system may be used in the servicing of a HVAC system.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device, where the instructions are executed by a processor. In the context of this document, a storage device is not a signal and "non-transitory" includes all media except signal media.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and products according to various example embodiments. It will be understood that the actions and functionality may be implemented at least in part by program instructions. These program instructions may be provided to a processor of a device, e.g., a hand-held measurement device, or other programmable data processing device to produce a machine, such that the instructions, which execute via a processor of the device, implement the functions/acts specified.

It is noted that the values provided herein are to be construed to include equivalent values as indicated by use of the term "about." The equivalent values will be evident to those having ordinary skill in the art, but at the least include values obtained by ordinary rounding of the last significant digit.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

## Claims

1. A tool, comprising:
a flare nut region at a distal end of the tool comprising a fastener, wherein the fastener forms an air tight seal with an environmental control system;
a core removal tool region at a proximal end comprising a shaft, a knob at the proximal end of the shaft, and a slidable fastener, wherein the shaft is oriented along a longitudinal axis of the core removal tool region; and
a coupler region between the distal end of the tool and the proximal end of the tool, the coupler region comprising at least two ports, an internal valve, and a longitudinal volume to accept the distal end of the core removal tool region, wherein each of the last two ports are angled at about 45 degrees from the longitudinal axis.

2. The device of claim 1, wherein the at least two ports each comprise a valve.

3. The device of any one of the preceding claims, further comprising at least two vacuum pump hoses operatively coupled to the at least two ports.

4. The device of any one of the preceding claims, wherein each of the at least two ports comprise a complementary fastener to accept a piece of environmental control equipment.

5. The device of claim 4, wherein the piece of environmental control equipment is selected from the group consisting of: a vacuum pump, a gas cylinder, a volume of refrigerant, a diagnostic tool, a pressure gauge, a containment vessel, a waste vessel, and a volume of lubricant.

6. The device of any one of the preceding claims, further comprising a mesh in the coupler region.

7. The device of claim 6, wherein the mesh is configured to accept a core and to retain the core during a pressure gradient.

8. The device of any one of the preceding claims, wherein the environmental control system is a heating, ventilation, and air conditioning system.

9. A method for servicing an environmental control system, comprising:
removing a core on the environmental control system using a multi-port core removal tool; and
installing the multi-port core removal tool within the environmental control system;
wherein the multi-port core removal tool comprises:
a flare nut region at a distal end of the tool comprising a fastener, wherein the fastener forms an air tight seal with an environmental control system;
a core removal tool region at a proximal end comprising a shaft, a knob at the proximal end of the shaft, and a slidable fastener, wherein the shaft is oriented along a longitudinal axis of the core removal tool region; and
a coupler region between the distal end of the tool and the proximal end of the tool, the coupler region comprising at least two ports, an internal valve, and a longitudinal volume to accept the distal end of the core removal tool region, wherein each of the at least two ports are angled at about 45 degrees from the longitudinal axis.

10. The method of claim 9, further comprising providing at least two vacuum pump hoses operatively coupled to the at least two ports, wherein provision of the at least two vacuum pump hoses reduces a time to reach a vacuum within the environmental control system.

11. The method of any one of claims 9-10, further comprising providing a mesh in the coupler region, wherein the mesh accepts a core and retains the core during a pressure gradient.

12. The method of any one of claims 9-11, wherein rotating the knob also rotates the core.
